(19) **Europäisches Patentamt**
**European Patent Office**
**Office européen des brevets**

(11) **EP 2 047 608 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(21) Anmeldenummer: **08758508.9**

(22) Anmeldetag: **14.05.2008**

(51) Int Cl.:
**H04B 1/707** (2006.01)     **H04L 7/04** (2006.01)

(86) Internationale Anmeldenummer:
**PCT/EP2008/003856**

(87) Internationale Veröffentlichungsnummer:
**WO 2008/138596 (20.11.2008 Gazette 2008/47)**

(54) **KORRELATIONSVORRICHTUNG**

CORRELATING DEVICE

DISPOSITIF DE CORRÉLATION

(84) Benannte Vertragsstaaten:
**DE FR**

(30) Priorität: **15.05.2007 DE 102007022978**

(43) Veröffentlichungstag der Anmeldung:
**15.04.2009 Patentblatt 2009/16**

(73) Patentinhaber: **Atmel Automotive GmbH**
**74072 Heilbronn (DE)**

(72) Erfinder:
• **FERCHLAND, Tilo**
**01277 Dresden (DE)**

• **POEGEL, Frank**
**01309 Dresden (DE)**
• **SACHSE, Eric**
**01109 Dresden (DE)**

(74) Vertreter: **Koch Müller**
**Patentanwaltsgesellschaft mbH**
**Maasstrasse 32/1**
**69123 Heidelberg (DE)**

(56) Entgegenhaltungen:
**EP-A- 1 391 999          WO-A-95/20842**
**US-A1- 2002 196 873**

EP 2 047 608 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft das Gebiet der digitalen Signalverarbeitung.

Aus der EP 1 391 999 A1 ist ein Verfahren und eine Vorrichtung zur Synchronisation und Zellsuche für ein WCDMA-System mit einem Leistungsdetektor zur fortwährenden Bestimmung der empfangenen Signalleistung bekannt.

Zur drahtlosen Übertragung von Informationen über relativ kurze Distanzen (zw. 1cm, 10m und 120m) können sog. "Wireless Personal Area Networks" (WPANs) verwendet werden. Im Gegensatz zu "Wireless Local Area Networks" (WLANs) benötigen WPANs zur Datenübertragung wenig oder sogar keine Infrastruktur, so dass kleine, einfache, energieeffiziente und kostengünstige Geräte für einen breiten Anwendungsbereich implementiert werden können.

Der Standard IEEE 802.15.4 spezifiziert beispielsweise niederratige WPANs, die mit Rohdatenraten bis max. 250 kbit/s und ortsfesten oder mobilen Geräten für Anwendungen in der industriellen Überwachung und Steuerung, in Sensometzwerken, in der Automatisierung, sowie im Bereich der Computerperipherie und für interaktive Spiele geeignet sind. Neben einer sehr einfachen und kostengünstigen Implementierbarkeit der Geräte ist für derartige Anwendungen ein extrem geringer Energiebedarf der Geräte von entscheidender Bedeutung. So werden mit diesem Standard Batterielaufzeiten von mehreren Monaten bis mehrere Jahre angestrebt.

Auf der Ebene der physikalischen Schicht spezifiziert der IEEE-Standard 802.15.4 im nahezu weltweit verfügbaren ISM-Band (industrial, scientific, medical) um 2,4 GHz für Rohdatenraten von $fB=250$ kbit/s eine Bandspreizung (Spreading) mit einer Chiprate von $fC=2$ Mchip/s sowie eine Offset-QPSK-Modulation (quarternary phase shift keying) mit einer Symbolrate von $fS=62,5$ ksymbol/s.

In einem 802.15.4-Sender für das ISM-Band wird der zu übertragende Datenstrom zunächst in eine Folge von PN-Sequenzen (pseudo noise) umgesetzt, indem in jeder Symbolperiode ($TS=1/fS=16\mu s$) vier Datenbits verwendet werden, um eine von insgesamt 16 PN-Sequenzen auszuwählen. Jedem Symbol aus vier Datenbits wird auf diese Weise eine symbolwertspezifische PN-Sequenz aus 32 PN-Chips (Chipperiode $TC=TS/32=500ns=1/fC$) zugeordnet, die anstelle der vier Datenbits übertragen wird. Die im Standard spezifizierten "quasi-orthogonalen" PN-Sequenzen P0, P1, ..., P15 unterscheiden sich voneinander durch zyklische Verschiebungen und/oder Inversion jedes zweiten Chipwertes (siehe IEEE Std 802.15.4-2003, Kap. 6.5.2.3).

Die den aufeinanderfolgenden Symbolen zugewiesenen PN-Sequenzen werden aneinandergehängt und anschließend Offset-QPSK-moduliert (quarternary phase shift keying), indem - mit Halbsinus-Impulsformung - die PN-Chips mit geradem Index (0, 2, 4, ...) auf den Inphase-(I)-Träger und diejenigen PN-Chips mit ungeradem Index (1, 3, 5, ...) auf den Quadraturphasen-(Q)-Träger moduliert werden. Zur Bildung eines Offsets werden die Quadraturphasen-Chips um eine halbe Chipperiode TC gegenüber den Inphase-Chips verzögert (siehe IEEE Std 802.15.4-2003, Kap. 6.5.2.4).

Zur Detektion von in einem Empfangssignal enthaltenen Datensymbolen sind sowohl kohärente als auch inkohärente Ansätze bekannt. Während bei kohärenten Ansätzen das Empfangssignal mit Hilfe einer aus einer Trägerregelungsschaltung gewonnenen frequenz- und phasenrichtigen Trägerschwingung in die komplexe Einhüllende (Basisband) überführt wird, kann bei inkohärenten Ansätzen zumindest auf die Phasenrichtigkeit, in Grenzen eventuell auch auf die Frequenzrichtigkeit der Trägerschwingung verzichtet werden.

Eine kohärente Empfangseinheit ist aus dem Lehrbuch "Nachrichtenübertragung" von Karl-Dirk Kammeyer, 2. Auflage, B. G. Teubner, Stuttgart, ISBN 3-519-16142-7 bekannt (Bild 12.1.7 auf Seite 417). Nachteilig ist hierbei der hohe Realisierungsaufwand, der sich einerseits aus der erforderlichen Trägerregelungsschaltung mit der dazugehörigen hochratigen (höher als die Chiprate) Multiplikation des Empfangssignals mit der frequenz- und phasenrichtigen Trägerschwingung und andererseits aus der aufwendigen komplexen Signalverarbeitung mit einer hochratigen komplexen Matched-Filterung ergibt. Dieser hohe Realisierungsaufwand bedingt zusätzlich einen sehr hohen Energieverbrauch.

Aus dem genannten Lehrbuch ist weiterhin eine inkohärente Empfangseinheit bekannt (Bild 12.3.7 auf Seite 447). Sie weist einen FM-Diskriminator, eine Integrationseinheit und einen sog. Limiter auf und erfordert die Verarbeitung von hochratigen (höher als die Chiprate) und teilweise komplexwertigen Signalen. Damit geht wiederum ein hoher Realisierungsaufwand und ein hoher Energieverbrauch einher. Außerdem ist die Leistungsfähigkeit (Symbolfehlerrate etc.) dieser Empfangseinheit bei der Demodulation von MSK-Signalen ungenügend.

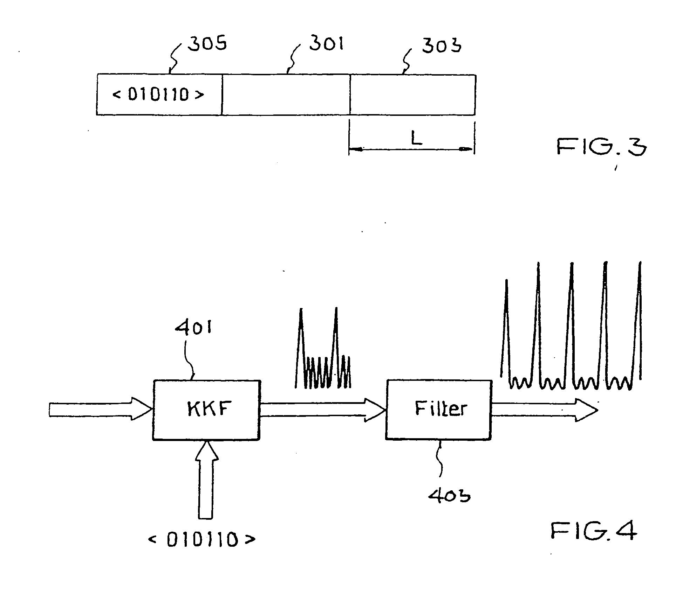

Zur Detektion von in einem Empfangssignal enthaltenen Datensymbolen bzw. zur Detektion von Datensymbolgrenzen werden die zu übertragenen Sendesymbole üblicherweise in Senderahmen übertragen, wobei jedem Senderahmen eine empfangsseitig bekannte Sequenz, z.B. eine PN-Sequenz, in Form einer Präambel beigefügt wird. Auf der Basis der Präambel wird im Empfänger zunächst eine Rahmendetektion durchgeführt, bei der die Symbolgrenzen ermittelt werden. Ein typisches Empfangssignal ist in Fig. 3 dargestellt. Es umfasst beispielsweise die Sendesymbole 301 und 303 mit jeweils L Abtastwerten (Koeffizienten) sowie eine Präambel 305, die z. B. die empfangsseitig vorbekannten Koeffizienten 010110 enthält und sich wiederholt.

Zur empfangsseitigen Rahmensynchronisation kann das Empfangssignal zunächst dem in Fig. 4 dargestellten Kreuzkorrelationsfilter 401 (KKF) zugeführt werden, das eine Kreuzkorrelation zwischen dem Empfangssignal und dem Präambelwort bzw. Präambelsymbol (Präambel) durchführt. Das Ausgangssignal des Kreuzkorrelationsfilters 401 weist periodische Spitzen auf, die jeweils auf ein Korrelationsmaximum hinweisen. Ein Korrelationsmaximum entsteht bei vollständiger oder nahezu vollständiger Überlappung der in dem Empfangssignal enthaltenen Präambel und der empfangsseitig zur Kreuzkorrelation herangezogenen Präambel. Daher kann auf der Basis der Korrelationsmaxima, die beispielsweise mittels eines Schwellwertdetektors detektiert werden können, auf die jeweilige Rahmen - bzw. Symbolgrenze geschlossen werden.

Aufgrund der Kanaleigenschaften, wie beispielsweise Mehrwegeausbreitung oder Kanalrauschen, sind die Korrelationsmaxima am Ausgang des Kreuzkorrelationsfilters 401 jedoch relativ schwach ausgeprägt. Um die Korrelationsmaxima stärker auszuprägen, kann dem Kreuzkorrelationsfilter 401 ein Kammfilter 403 nachgeschaltet werden, das beispielsweise ein IIR-Filter mit einer Tiefpasscharakteristik ist (IIR: Infinite Impulse Response). Am Ausgang des Filters 403 entsteht ein verbessertes Korrelationssignal, das, wie in Fig. 4 dargestellt ist, deutlich ausgeprägte Korrelationsmaxima und im Vergleich zum Korrelationssignal am Ausgang des Kreuzkorrelationsfilters 401 reduzierte Korrelationsminima aufweist. Die Zeitlage der Korrelationsmaxima bleibt dabei unverändert.

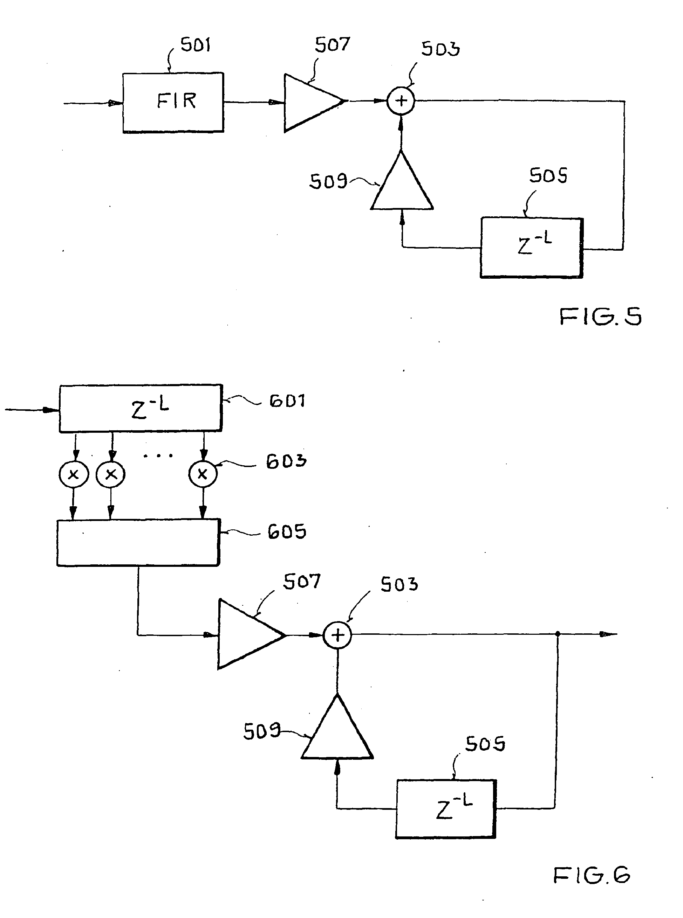

Fig. 5 zeigt ein Blockdiagramm der Korrelationsvorrichtung aus Fig. 4 mit einem Korrelationsfilter 501, das ein FIR-Filter ist (FIR: Finite Impulse Response), und einem dem FIR-Filter 501 nachgeschalteten IIR-Filter, das einen Addierer 503 und ein in einer Rückkopplungsschleife angeordnetes Verzögerungselement 505, das eine Verzögerung um L Takte bewirkt, aufweist. Ferner sind Verstärkungselemente 507 und 509 vorgesehen, die ebenfalls zum IIR-Filter gehören, um die an den Eingängen des Addierers 503 anliegenden Signale zu verstärken. Das Ausgangssignal des Addierers liefert eine Folge, auf deren Basis die Rahmendetektion durchgeführt werden kann.

In Fig. 6 ist die Struktur des Korrelationsfilters 501 aus Fig. 5 genauer dargestellt. Das Korrelationsfilter umfasst ein Schieberegister 601 zum Verzögern der Eingangssignalfolge um L Takte, wobei das Schieberegister 601 ferner eine Anzahl von Ausgängen aufweist, um den Inhalt der Registerzellen koeffizientenweise über die Anzahl der Registerausgänge bereitzustellen. Den Registerausgängen sind Multiplizierer 603 nachgeschaltet, die eine koeffizientenweise Multiplikation der Registerkoeffizienten mit empfangsseitig vorbekannten Präambelkoeffizienten durchführen. Die Multiplikationsergebnisse werden mittels eines Additionselementes 605 aufsummiert, wobei das Summationsergebnis über den Verstärker 507 dem Addierer 503 zugeführt wird. Dadurch wird eine Faltung mit zeitlich gedrehter Korrelationssequenz durchgeführt.

Nachteilig an der in Fig. 6 dargestellten Korrelationsvorrichtung ist deren hohe Komplexität und der damit verbundene erhöhte Strombedarf, weil zu deren Realisierung zwei Verzögerungselemente, 505 und 601, notwendig sind.

Es ist die Aufgabe der Erfindung, eine Korrelationsvorrichtung der vorgenannten Art mit geringerem Energiebedarf zu schaffen.

Diese Aufgabe wird durch die Merkmale der unabhängigen Ansprüche gelöst.

Die vorliegende Erfindung basiert auf der Erkenntnis, dass die Komplexität und somit der Energiebedarf der Korrelationsvorrichtung durch eine Vertauschung der Reihenfolge der Signalverarbeitung reduziert werden kann. Denn durch diese Vertauschung kann auf ein Verzögerungselement verzichtet werden, sodass ein einziges Verzögerungselement sowohl für die Korrelation als auch für die IIR-Filterung vorgesehen werden kann.

Erfindungsgemäß wird eine Eingangssignalfolge, die beispielsweise ein Empfangssignal repräsentiert und Abtastkoeffizienten aufweist, direkt oder verstärkt einem Addierer zugeführt, dessen Ausgang mit einem Eingang eines einzigen Verzögerungselementes gekoppelt ist. Das Verzögerungselement, beispielsweise ein Schieberegister oder ein Ring-Buffer, verzögert die Ausgangssignalfolge des Addierers und führt die resultierende, verzögerte Signalfolge (als Hilfssignalfolge) einem weiteren Eingang des Addierers zu. Das Verzögerungselement umfasst ferner eine Mehrzahl von Ausgängen, an denen die jeweiligen Inhalte der Registerzellen ausgegeben werden können, die durch das Verzögerungselement aufgenommenen Koeffizienten der Ausgangssignalfolge des Addierers bestimmt sind. Diese Koeffizienten werden beispielsweise parallel mit Koeffizienten einer Verknüpfungsfolge, die beispielsweise die Präambel darstellt oder auf der Präambel basiert, korreliert. Die resultierenden Korrelationsergebnisse beinhalten bereits Information über den Korrelationskoeffizienten, der durch eine Aufsummierung der Korrelationsergebnisse erhalten werden kann. Auf der Basis der Korrelationsergebnisse oder der laufend erhaltenen Korrelationskoeffizienten können die Korrelationsmaxima erfasst und nachfolgend zur Rahmendetektion bzw. zur Detektion von Symbolgrenzen verwendet werden.

Neben der Reduktion des Strombedarfs wird erfindungsgemäß durch die Einsparung eines Verzögerungselementes auch eine Strukturvereinfachung erzielt, die eine effiziente Hardware- oder Softwarerealisierung der Korrelationsvorrichtung ermöglicht.

Die Erfindung schafft eine Korrelationsvorrichtung mit einem Addierer zum Addieren einer Eingangssignalfolge und einer Hilfssignalfolge, um eine Additionssignalfolge zu erhalten, einem Verzögerungselement zum Verzögern der Additionssignalfolge, um die Hilfssignalfolge zu erhalten, wobei das Verzögerungselement eine Mehrzahl von Koeffizientenausgängen zum Bereitstellen von Koeffizienten der Additionssignalfolge aufweist. Die Korrelationsvorrichtung umfasst ferner ein Verknüpfungselement zum koeffizientenweisen Verknüpfen der Koeffizienten der Additionssignalfolge mit Verknüpfungskoeffizienten, um ein oder mehrere Korrelationsergebnisse zu erhalten.

Gemäß einer Ausführungsform können die Korrelationsergebnisse bereits ein Ausgangssignal der Korrelationsvorrichtung bilden, auf dessen Basis beispielsweise eine Weiterverarbeitung, wie z.B. die Detektion der Korrelationsmaxima, durchgeführt werden kann.

Gemäß einer weiteren Ausführungsform umfasst die Korrelationsvorrichtung eine Additionseinrichtung zum Aufsummieren der Korrelationsergebnisse, um einen Korrelationskoeffizienten zu erhalten. In diesem Fall ist der Korrelationskoeffizient bzw. eine Folge von sukzessiven Korrelationskoeffizienten das Ausgangssignal der Korrelationsvorrichtung.

Gemäß einer weiteren Ausführungsform umfasst das Verzögerungselement eine Anzahl von Speicherelementen mit jeweils einem Koeffizientenausgang. Die Anzahl der Speicherelemente kann daher die Anzahl der Koeffizienten der Additionssignalfolge aufnehmen oder über die Anzahl der Koeffizientenausgänge bereitstellen. Das Verzögerungselement kann beispielsweise ein Schieberegister oder ein Ring-Buffer sein, der gegenüber einem herkömmlichen Ring-Buffer um die Anzahl der Koeffizientenausgänge erweitert ist, um die Koeffizienten der Additionssignalfolge bereitzustellen.

Gemäß einer weiteren Ausführungsform umfasst der Addierer einen ersten Addierereingang zum Empfangen der Eingangssignalfolge, einen zweiten Addierereingang zum Empfangen der Hilfssignalfolge und einen Addiererausgang zum Ausgeben der Additionssignalfolge, wobei das Verzögerungselement dem Addiererausgang nachgeschaltet ist und einen Ausgang aufweist, der mit dem zweiten Addierereingang gekoppelt ist. Das Verzögerungselement weist ferner eine Mehrzahl von Ausgängen zum Bereitstellen der Koeffizienten der Additionssignalfolge auf, wobei das Verknüpfungselement der Mehrzahl von Ausgängen des Verzögerungselementes nachgeschaltet ist und eine Mehrzahl von Ausgängen zum Bereitstellen von Korrelationsergebnissen aufweist. Das Verknüpfungselement ist bevorzugt ausgebildet, die an den Ausgängen des Verzögerungselementes bereitstellbaren Koeffizienten der Additionssignalfolge koeffizientenweise mit Verknüpfungskoeffzienten zu verknüpfen, um die Korrelationsergebnisse bereitzustellen. Durch diese Struktur wird eine effiziente Realisierung der Korrelationsvorrichtung in Hardware erreicht.

Gemäß einer weiteren Ausführungsform wird bei der Verknüpfung der Koeffizienten der Additionssignalfolge mit den Verknüpfungskoeffizienten zum Zwecke der Bildung der Korrelationsergebnisse die Art der Verknüpfungskoeffizienten berücksichtigt. Sind deren Amplituden beispielsweise gleich oder unterscheiden sich die Verknüpfungskoeffizienten durch Vorzeichen oder vorbestimmte Amplituden, so kann die Verknüpfung durch eine vorbestimmte Skalierung (z.B. um den Faktor 2) oder durch eine Vörzeicheninvertierung realisiert werden. Daher kann das Verknüpfungselement ausgebildet sein, um einen Koeffizienten der Additionssignalfolge mit einem Skalierungsfaktor zu skalieren, um ein Korrelationsergebnis zu erhalten, wobei der Skalierungsfaktor durch eine Amplitude und/oder durch ein Vorzeichen eines Verknüpfungskoeffizienten bestimmt ist. Dadurch wird eine effiziente Verknüpfung ermöglicht. Dasselbe gilt analog für die weiteren Koeffizienten.

Gemäß einer weiteren Ausführungsform ist das Verknüpfungselement ausgebildet, einen Koeffizienten der Additionssignalfolge unverändert oder vorzeicheninvertiert als ein Korrelationsegebnis auszugeben, falls ein Vorzeichen eines Verknüpfungskoeffizienten positiv oder negativ ist. Dasselbe gilt analog für die weiteren Koeffizienten.

Gemäß einer weiteren Ausführungsform bilden der Addierer und das Verzögerungselement, das die Hilfsfolge dem Addierer wieder zuführt, ein Kammfilter.

Gemäß einer weiteren Ausführungsform ist die Verknüpfungsfolge durch eine differentielle Modulation oder Demodulation einer sendeseitig verwendbaren Präambel abgeleitet.

Gemäß einem weiteren Aspekt schafft die Erfindung eine Detektionsvorrichtung zum Detektieren einer Präambel in einer Eingangssignalfolge unter Verwendung einer Verknüpfungsfolge, die die Präambel oder eine von der Präambel abhängige Präambelfolge aufweist, mit der erfindungsgemäßen Korrelationsvorrichtung und einem Detektor zum Detektieren der Präambel auf der Basis eines Ausgangssignals der Korrelationsvorrichtung. Der Detektor kann beispielsweise ausgebildet sein, die Korrelationsmaxima durch eine Schwellwertdetektion oder durch eine Spitzendetektion zu bestimmen.

Gemäß einem weiteren Aspekt schafft die Erfindung ein Korrelationsverfahren, mit folgenden Schritten: Addieren einer Eingangssignalfolge und einer Hilfssignalfolge, um eine Additionssignalfolge zu erhalten, Verzögern der Additionssignalfolge, um die Hilfssignalfolge zu erhalten, Bereitstellen von Koeffizienten der Additionsfolge und koeffizientenweises Verknüpfen der Koeffizienten der Additionssignalfolge mit Verknüpfungskoeffizienten, um Korrelationsergebnisse zu erhalten.

Weitere Ausführungsformen des Korrelationsverfahrens sind durch die Funktionalität der erfindungsgemäßen Korrelationsvorrichtung bestimmt.

Gemäß einem weiteren Aspekt schafft die Erfindung ein Verfahren zum Detektieren einer Präambel in einer Eingangssignalfolge unter Verwendung einer Verknüpfungsfolge, die die Präambel oder eine von der Präambel abhängige Präambelfolge aufweist. Das Verfahren zum Detektieren der Präambel umfasst die Schritte des erfindungsgemäßen Korrelationsverfahrens sowie den Schritt des Detektierens der Präambel auf der Basis eines Ausgangssignals der Korrelationsvorrichtung.

Gemäß einem weiteren Aspekt schafft die Erfindung ein Computerprogramm zum Durchführen zumindest eines der erfindungsgemäßen Verfahren, wenn das Computerprogramm auf einem Computer abläuft.

Weitere Ausführungsformen der vorliegende Erfindung werden anhand der beiliegenden Figuren erläutert. Es zeigen:

Fig. 1 ein Blockdiagramm einer Korrelationsvorrichtung gemäß einer Ausführungsform;

Fig. 2 ein Blockdiagramm einer Korrelationsvorrichtung gemäß einer weiteren Ausführungsform;

Fig. 3 die Struktur eines Empfangssignals;

Fig. 4 ein Blockdiagramm einer Korrelationsvorrichtung;

Fig. 5 ein Blockdiagramm einer konventionellen Korrelationsvorrichtung; und

Fig. 6 ein Blockdiagramm einer konventionellen Korrelationsvorrichtung.

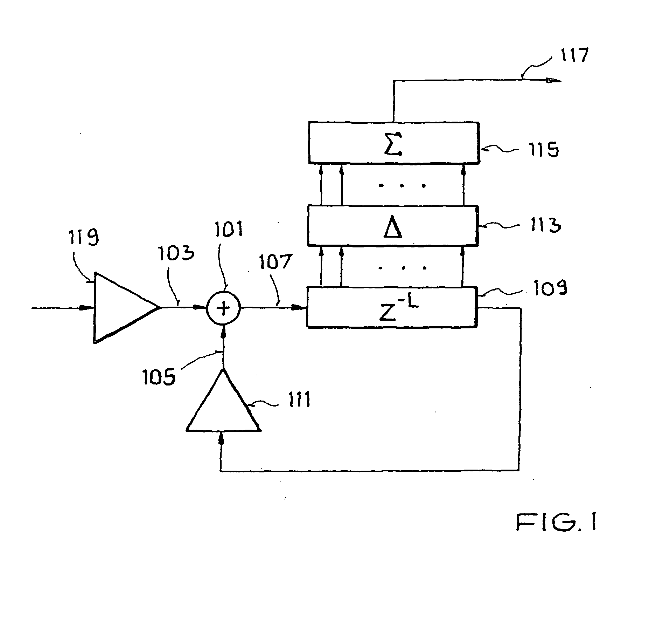

Die in Fig. 1 dargestellte Korrelationsvorrichtung umfasst einen Addierer 101 mit einem ersten Eingang 103, einem zweiten Eingang 105 und einem Ausgang 107, der mit einem Eingang eines Verzögerungselementes 109 verbunden ist. Das Verzögerungselement 109 umfasst einen Ausgang, der mit dem zweiten Eingang 105 des Addierers 101 über einen optionalen Verstärker 111 gekoppelt ist.

Das Verzögerungselement 109 umfasst ferner beispielsweise L Ausgänge, wobei L eine natürliche Zahl ist, die jeweils mit entsprechenden L Eingängen eines Verknüpfungselementes 113 ($\Delta$) verbunden sind. Das Verknüpfungselement 113 umfasst L Ausgänge, die mit L Eingängen eines Additionselementes 115 ($\Sigma$), das einen Ausgang 117 umfasst, gekoppelt sind. Ferner ist ein optionaler Verstärker 119 vorgesehen.

Eine Eingangssignalfolge wird nach einer optionalen Verstärkung durch den Verstärker 119 dem Addierer 101 zugeführt. Der Addierer 101 addiert eine an dem zweiten Eingang 105 anlegbare Hilfssignalfolge und die Eingangssignalfolge, um eine Additionssignalfolge über den Ausgang 107 an den Eingang des Verzögerungselementes 109 anzulegen, das die Additionssignalfolge um beispielsweise L Takte (bezogen auf die der Additionssignalfolge zugrunde liegende Abtastrate oder auf die Taktrate, mit der das Verzögerungselement 109 getaktet wird) verzögert. Das Verzögerungselement 109 umfasst hierzu beispielsweise L Speicherzellen, wobei jeder Speicherzelle ein Ausgang zugeordnet ist. Die L Koeffizienten der Additionssignalfolge, die den Inhalt der Speicherzellen repräsentieren, werden dem Verknüpfungselement 113 bevorzugt parallel zugeführt, das diese koeffizientenweise mit Verknüpfungskoeffizienten beispielsweise mittels Skalierung, Addition oder Multiplikation verknüpft. Die Verknüpfungskoeffizienten entsprechen beispielsweise den Koeffizienten einer Präambel oder sind auf der Basis der Koeffizienten der Präambel durch z.B. deren differentielle Modulation oder Demodulation abgeleitet.

Das Verknüpfungselement 113 liefert als Ergebnis der Verknüpfung L Korrelationsergebnisse, die mittels der Additionseinrichtung 115 aufsummiert werden, wobei das Summationsergebnis als ein Korrelationskoeffizient über den Ausgang 117 ausgegeben werden kann.

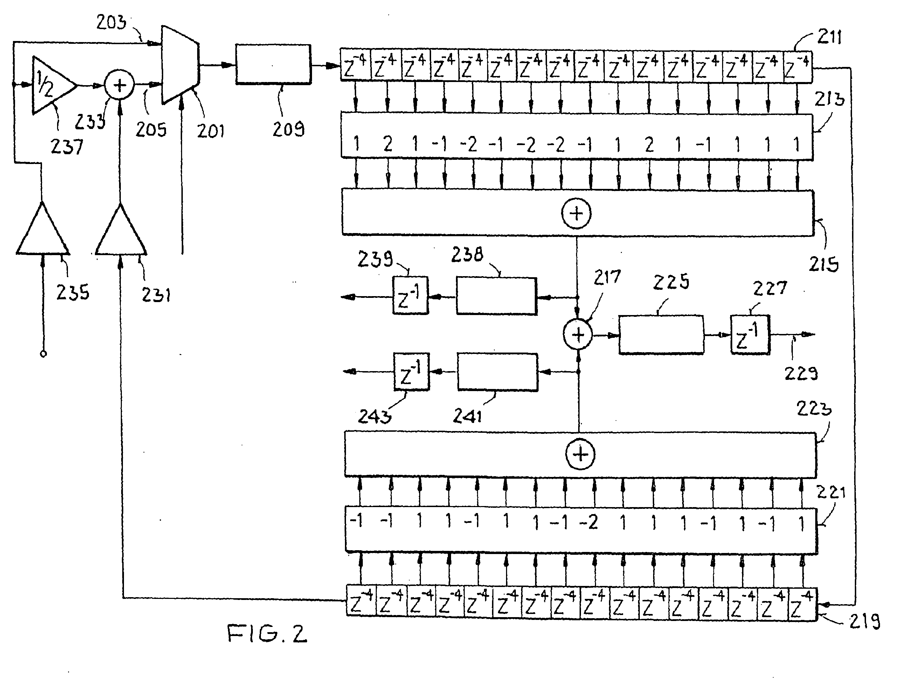

Fig. 2 zeigt ein Blockdiagram einer Korrelationsvorrichtung gemäß einer weiteren Ausführungsform, mit der auch komplexwertige Eingangssignalfolgen verarbeitet werden können.

Die Korrelationsvorrichtung umfasst einen Multiplexer 201 mit einem ersten Eingang 203, einem zweiten Eingang 205 und einem Ausgang, der über ein optionales Bitbreitenänderungselement 209 mit einem Eingang eines ersten Verzögerungselementes 211 verbunden ist. Das erste Verzögerungselement 211 umfasst eine Mehrzahl von Ausgängen, die mit einer Mehrzahl von Eingängen eines ersten Verknüpfungselementes 213 gekoppelt sind. Das erste Verknüpfungselement 213 umfasst eine Mehrzahl von Ausgängen, die mit einer ersten Additionseinrichtung 215 gekoppelt sind, wobei ein Ausgang der Additionseinrichtung 215 mit einem ersten Eingang eines Addierers 217 verbunden ist.

Ein weiterer Ausgang des ersten Verzögerungselementes 211 ist mit einem Eingang eines zweiten Verzögerungselementes 219 verbunden, dessen Mehrzahl von Ausgängen mit einer entsprechenden Mehrzahl von Eingängen eines zweiten Verknüpfungselementes 221 verbunden sind. Das zweite Verknüpfungselement 221 umfasst eine Mehrzahl von Ausgängen, die mit einer Mehrzahl von Eingängen einer zweiten Additionseinrichtung 223 verbunden sind, wobei ein Ausgang der Additionseinrichtung 223 mit einem zweiten Eingang des Addierers 217 verbunden ist.

Der Addierer 217 umfasst ferner einen Ausgang, der über ein optionales Bitbreitenänderungselement 225 und ein optionales Buffer-Element 227 mit einem Ausgang 229 der Korrelationseinrichtung gekoppelt ist.

Ein weiterer Ausgang des zweiten Verzögerungselementes 219 ist über einen optionalen Verstärker 231, der z.B. einen Verstärkungsfaktor von 0.875 aufweist, mit einem ersten Eingang eines Addierers 233 verbunden, dessen Ausgang mit dem zweiten Eingang 205 des Multiplexers 201 verbunden ist.

Die Korrelationsvorrichtung umfasst ferner ein Verarbeitungselement 235, das mit dem ersten Eingang 203 des Multiplexers 201 und über einen optionalen Verstärker 237, der z.B. einen Verstärkungsfaktor von 1/2 aufweist, mit einem zweiten Eingang 205 des Addierers verbunden ist. Der Multiplexer 201 ist ferner über einen in Fig. 2 eingezeichneten Steuereingang steuerbar.

Optional umfasst die Korrelationseinrichtung ein Bitbreitenänderungselement 238 und ein Buffer-Element 239, die in Serie geschaltet mit dem Ausgang der ersten Additionseinrichtung 215 gekoppelt sind und Teilkorrelationsergebnisse ausgeben. Ferner umfasst die Korrelationseinrichtung optional ein Bitbreitenänderungselement 241 und ein Buffer-Element 243, die in Serie geschaltet mit dem Ausgang der zweiten Additionseinrichtung 223 gekoppelt sind und weitere Teilkorrelationsergebnisse ausgeben.

Die in Fig. 2 dargestellte Korrelationsvorrichtung führt eine Korrelation zwischen einer Eingangsfolge und einer Verknüpfungsfolge auf der Basis von zwei Teilkorrelationen durch. Dabei liefern die erste Verzögerungseinrichtung 211, das erste Verknüpfungselement 213 sowie die erste Additionseinrichtung 215 ein erstes Hilfs-Korrelationsergebnis in Form eines ersten Hilfs-Koeffizienten und die zweite Verzögerungseinrichtung 219, das zweite Verknüpfungselement 221 sowie die zweite Additionseinrichtung 223 ein zweites Hilfs-Korrelationsergebnis in Form eines zweiten Hilfs-Koeffizienten. Der Addierer 217 addiert die Hilfs-Koeffizienten, um einen Korrelationskoeffzienten zu erhalten. Enthält die Eingangsfolge zumindest eine Präambel, die mit der Verknüpfungsfolge zumindest teilweise korreliert ist, so ist der Korrelationskoeffizient ungleich null und weist auf den Korrelationsgrad zwischen der Eingangsfolge und der Verknüpfungsfolge hin. Auf diese Weise kann sukzessive für die Detektion der Symbolgrenzen nach einem Korrelationsmaximum gesucht werden.

Die Koeffizienten der Verknüpfungsfolge können den (ggf. überabgetasteten) Koeffizienten der jeweils verwendeten PN-Sequenz entsprechen. Bevorzugt umfasst die Verknüpfungsfolge jedoch Koeffizienten, die sich von den Koeffizienten der PN-Sequenz (bzw. deren überabgetasteten Version) unterscheiden, die jedoch aus dieser (oder aus deren überabgetasteten Version) durch z.B. eine Amplitudenskalierung und/oder Vorzeicheninversion abgeleitet werden, um genauere Korrelationsergebnisse bei Multiwegeausbreitung zu erzielen.

Die in Fig. 2 dargestellte gleitende Kreuzkorrelation (Sliding Cross Correlation) der z.B. differentiell demodulierten Präambelsequenz kann beispielsweise unter Verwendung einer Verknüpfungsfolge, die im Folgenden als F-Code bezeichnet wird, die einem Präambelsymbol zugeordnet ist, durchgeführt werden. Durch die Korrelation werden detektierbare Signalspitzen (Peaks) erzeugt, wenn das Empfangssignal mit dem Präambelsymbol der Chipsequenz übereinstimmt bzw. wenn das Empfangssignal das Präambelsymbol umfasst.

Die Verknüpfungsfolge, die eine Korrelationssequenz formt, kann z.B. durch differentielle Demodulation einer idealen Präambelsequenz erzeugt werden, welche beispielsweise die folgende O-QPSK-modulierte Binärsequenz (IEEE 802.15-Standard) ist:

$$[1\ 1\ 0\ 1\ 1\ 0\ 0\ 1\ 1\ 1\ 0\ 0\ 0\ 0\ 1\ 1\ 0\ 1\ 0\ 1\ 0\ 0\ 1\ 0\ 0\ 0\ 1\ 0\ 1\ 1\ 1\ 0].$$

Für jedes Präambelsymbol ergibt sich beispielsweise die folgende Verknüpfungsfolge:

$$i^*[1\ 1\ 1\ \text{-}1\ \text{-}1\ \text{-}1\ \text{-}1\ \text{-}1\ \text{-}1\ 1\ 1\ 1\ \text{-}1\ 1\ 1\ 1\ 1\ \text{-}1\ 1\ \text{-}1\ 1\ \text{-}1\ 1\ 1\ 1\ \text{-}1\ \text{-}1\ 1\ 1\ \text{-}1\ 1\ 1\ \text{-}1\ \text{-}1].$$

Gemäß einer weiteren Ausführungsform kann die Verknüpfungsfolge durch den folgenden Multilevel-Softcode ersetzt werden:

$$i^*[1\ 2\ 1\ \text{-}1\ \text{-}2\ \text{-}1\ \text{-}2\ \text{-}2\ \text{-}1\ 1\ 2\ 1\ \text{-}1\ 1\ 1\ 1\ 1\ \text{-}1\ 1\ \text{-}1\ 1\ 1\ 1\ \text{-}2\ \text{-}1\ 1\ 1\ \text{-}1\ 1\ 1\ \text{-}1\ 1].$$

Der obige Multilevel-Softcode verbessert die Korrelationseigenschaften insbesondere für den Fall des IEEE 802.15-Standards insbesondere bei einer Multiwegeausbreitung und führt zu einer Reduktion des Grundfehlers.

Die Erzeugung der Verknüpfungsfolgen durch eine differentielle Demodulation einer PN-Sequenz wird im Anschluss an die Beschreibung des Ausführungsbeispiels aus Fig. 2 näher erläutert.

Erfindungsgemäß ist das Kammfilter integriert und umfasst das erste und das zweite Verzögerungselement 211 und 219 sowie den Addierer 233. Das Kammfilter trägt zur Verbesserung des Signal-zu-Rausch-Verhältnisses durch eine Mittelung des Korrelationsausgangs über mehrere Symbole bei. Das Filter hat beispielsweise eine IIR-Übertragungsfunktion erster Ordnung mit einer Rückkopplungsverzögerung, die beispielsweise der Zeitdauer eines Präambelsymbols entspricht. Das z.B. reellwertige Kammfilter kann bei einer Abtastrate von 8MHz durch folgende Übertragungsfunktion beschrieben werden:

$$h(z)=0.5/[1-0.875z^{-128}].$$

Das Kammfilter kann ferner z.B. während der Kreuzkorrelationsmessung oder während der Präambeldetektion deaktiviert werden. Dies kann z.B. durch die Einspeisung des (mit-i rotierten) Empfangssignals in eine Register-Bank und/oder durch die Verwerfung des IIR-Filter-Ausgangs realisiert werden.

Die in Fig. 2 dargestellte Datenpfad-Architektur verwendet einen seriellen I/Q-Ansatz, wobei bei einer Überabtastung um beispielsweise den Faktor zwei die komplexe I/Q-Abtastrate bei z.B. 4Msps liegt, was 8Msps bei seriellen (oder gemultiplexten) I/Q-Datenstrom entspricht.

Die Verknüpfungsfolge kann z.B. auf Chip-Ebene bei 2Msps entworfen werden, wobei die Abtastrate des Datenpfades bei 8Msps liegen kann, was in einer Verzögerung von vier Abtastwerten pro Tap resultiert, die die Speicherzellen der Verzögerungselemente 211 und 219 bewirken.

Im Folgenden wird die Funktionsweise der Korrelationsvorrichtung aus Fig. 2 beschrieben.

Die Eingangsfolge wird dem Verarbeitungselement 235 zugeführt, das eine Operation durchführt, die mathematisch durch eine Multiplikation mit der komplexen Zahl -i beschrieben werden kann. Eine an einen Eingang des Verarbeitungselements 235 anlegbare Eingangsignalfolge wird daher mit der Zahl -i multipliziert und sowohl dem Verstärker 237, dessen Verstärkungsfaktor beispielsweise ½ beträgt, als auch dem ersten Eingang 203 des Multiplexers 201 zugeführt. Das Ausgangssignal des Verstärkers 237 wird einem ersten Eingang des Addierers 233 zugeführt. Der Addierer 233 addiert das Ausgangssignal des zweiten Verzögerungselements 219 (Hilfssignalfolge), das mittels des Verstärkers 231 optional verstärkt werden kann, und das Ausgangssignal des Verstärkers 237 und gibt ein Ausgangssignal (Additionssignalfolge) aus, das an den zweiten Eingang 205 des Multiplexers 201 angelegt wird.

Der Multiplexer 201 multiplext z.B. koeffizientenweise die Koeffizienten der Ausgangssignalfolge des Verarbeitungselementes 235 und die Koeffizienten der Ausgangssignalfolge des Addierers 233 und führt die resultierende Multiplexsignalfolge nach einer optionalen Bitbreitenänderung durch das Bitbreitenänderungselement 209 dem ersten Verzögerungselement 211 zu.

Das erste Verzögerungselement 211 umfasst eine Mehrzahl von Speicherzellen zum Aufnehmen von Koeffizienten der Ausgangssignalfolge des Multiplexers 201. Dabei bewirkt jede Speicherzelle aufgrund des seriellen I/Q-Ansatzes und der Überabtastung eine Verzögerung bei einer Überabtastung um z.B. den Faktor zwei um 4 Takte (bezogen auf die Abtastrate der Ausgangssignalfolge des Multiplexers 201 bzw. auf die Taktrate des Verzögerungselementes 211).

Die Koeffizienten der Ausgangssignalfolge des Multiplexers 201 bilden somit den Inhalt der Speicherzellen des Verzögerungselementes 211. Jede Speicherzelle ist dabei mit einem Ausgang versehen, der mit einem korrespondieren Eingang des ersten Verknüpfungselementes 213 verbunden ist.

Das Verknüpfungselement 213 verknüpft z.B. durch Skalierung, Inversion, Addition oder Multiplikation die Inhalte der Speicherzellen des Verzögerungselements 211. Mit anderen Worten wird jeder Koeffizient der im Verzögerungselement 211 zu einem Zeitpunkt abgelegten Ausgangssignalfolge des Multiplexers 201 koeffizientenweise mit einer ersten Verknüpfungsfolge verknüpft. Die erste Verknüpfungsfolge umfasst Verknüpfungskoeffizienten, die beispielsweise der ersten Hälfte der Koeffizienten der eingesetzten PN-Sequenz entsprechen oder die aus dieser abgeleitet sind. Beispielsweise umfasst die erste Verknüpfungsfolge die in Fig. 2 dargestellten Koeffizienten (1 2 1 -1 -2 -1 usw.).

Ein Ausgang des ersten Verzögerungselementes 211 ist mit einem Eingang des zweiten Verzögerungselementes 219, das bevorzugt identisch aufgebaut wie das erste Verzögerungselement 211 ist, verbunden. Das zweite Verzögerungselement 219 umfasst bevorzugt dieselbe Anzahl von Speicherzellen wie das erste Verzögerungselement 211 und ist für die zweite Teilkorrelation vorgesehen. Die Ausgänge der Registerzellen des zweiten Verzögerungselements 219, die jeweils ebenfalls z.B. eine Verzögerung um vier Takte bewirken, sind mit korrespondierenden Eingängen des zweiten Verknüpfungselements verbunden, das eine koeffizientenweise Verknüpfung der Registerinhalte des zweiten Verzögerungselements 219 mit einer zweiten Verknüpfungsfolge durchführt, um das zweite Hilfs-Korrelationsergebnis zu erhalten. Die zweite Verknüpfungsfolge umfasst Koeffizienten, die beispielsweise mit der zweiten Hälfte der Koeffizienten der verwendeten PN-Sequenz korreliert sind. Die zweite Verknüpfungsfolge kann dabei identisch mit der zweiten Hälfte der PN-Sequenz oder, wie in Fig. 2 dargestellt, sich von dieser unterscheiden.

Die zweite Additionseinrichtung 223 ist bevorzugt identisch aufgebaut wie die erste Additionseinrichtung 215 und liefert durch Aufsummierung der zweiten Korrelationsergebnisse, die an den. Ausgängen des zweiten Verknüpfungselementes 223 bereitgestellt werden, das zweite Hilfs-Korrelationsergebnis.

Der Addierer 217 summiert das erste und das zweite Hilfs-Korrelationsergebnis, um einen Korrelationskoeffizienten zu erhalten, der auf den Grad der Korrelation zwischen der Verknüpfungsfolge, die die erste und die zweite Verknüpfungsfolge umfasst, und der momentanen, in den Speicherzellen der Verzögerungselemente 211 und 219 abgelegten Signalfolge. Dabei entspricht der größte sukzessiv ermittelte Korrelationskoeffizient der (vollständigen) Überdeckung zwischen der Verknüpfungsfolge und der in der Signalfolge enthaltenen PN-Sequenz.

Der Korrelationskoeffizient wird am Ausgang des Addierers 217 bereitgestellt und nach einer optionalen Bitbreitenänderung durch das Bitbreitenänderungselement 225 dem optionalen Verzögerungselement 227 zugeführt, das eine Verzögerung um z.B. einen Takt bewirkt.

Das erste Hilfs-Korrelationsergebnis am Ausgang der ersten Additionseinrichtung 215 wird optional über das Bitbreitenelement 238, das eine Bitbreitebänderung bewirkt, sowie über das Verzögerungselement 239, das eine Verzögerung um z. B. einen Takt bewirkt, geführt und zum Zwecke optionaler weiterer Signalverarbeitung bereitgestellt. In Analogie hierzu wird das zweite Hilfs-Korrelationsergebnis am Ausgang der zweiten Additionseinrichtung 223 über das Bitbreitenelement 241, das eine Bitbreitebänderung bewirkt, sowie über das Verzögerungselement 243, das eine Verzögerung um z.B. einen Takt bewirkt, geführt und zum Zwecke optionaler weiterer Signalverarbeitung bereitgestellt.

Die Bitbreitenänderungselemente 209, 225, 238 und 243 sind, wie bereits erwähnt, optional und bewirken eine Bitbreitenänderung durch eine Bitabschneidung in der in Fig. 2 dargestellten Weise. Dabei schneidet das Bitbreitenänderungselement 209 bei einer Folge umfassend 7 Bits mit der Bit-Indizierung [6:0] gemäß der Vorschrift [6:0] -> [5:3] die Bits mit den Indizes 6, 2 und 1 ab und lässt de Bits mit den Indizes 5 bis 3 durch. Das Bitbreitenänderungselement 225 schneidet beispielsweise bei einer Folge mit 9 Bits gemäß der Vorschrift [8:0] -> [7:0] das Bit mit dem Index 8 ab und lässt die Bits 7 bis 0 durch. Das Bitbreitenänderungselement 238 schneidet beispielsweise bei einer Folge mit 8 Bits gemäß der Vorschrift: [7:0] -> [6:0] das Bit mit dem Index 7 ab und lässt die Bits 6 bis 0 durch.

Am Ausgang des zweiten Verzögerungselementes 219 wird die Hilfsfolge bereitgestellt, die nach einer optionalen Verstärkung durch den Verstärker 231, dessen Verstärkungsfaktor beispielsweise 0.875 beträgt, dem Addierer 23 zugeführt, wodurch sich die für die (integrierte) IIR-Filterung notwendige Rückkopplungsschleife ergibt. Somit wird sowohl für die Korrelation als auch für die Kammfilterung dasselbe Verzögerungselement umfassend das erste und das zweite Verzögerungselement 211 und 219, verwendet.

Im Folgenden wird die erfindungsgemäße Erzeugung von aus einer PN-Sequenz durch die differentielle Demodulation abgeleiteten Verknüpfungsfolgen, auf die durch den Begriff "abgeleitete Sequenzen" Bezug genommen wird, näher erläutert:

Dies ist insbesondere dann vorteilhaft, wenn - wie bei Anwendungen in der industriellen Überwachung und Steuerung, in Sensornetzwerken, in der Automatisierung oder im Bereich der Computerperipherie - ein extrem geringer Energiebedarf und eine sehr einfache Realisierbarkeit unabdingbar sind. Obwohl die Erfindung nicht auf den IEEE-Standard 802.15.4 beschränkt ist, ist dies exemplarisch bei Sende-/Empfangsvorrichtungen für diesen Standard der Fall.

In einer weiteren Ausgestaltung weisen die abgeleiteten Chips (d.h. die Chips der abgeleiteten Sequenz, die als Verknüpfungsfolge herangezogen werden kann) mit einem ersten positiven Index (d.h. alle Chips außer dem ersten) jeweils einen Wert auf, der aus einer XOR-Verknüpfung des PN-Chips (d.h. des Chips derjenigen ersten PN-Sequenz, der die abgeleitete Sequenz zugeordnet ist) mit diesem ersten positiven Index mit dem indexmäßig (und damit zeitlich) jeweils vorhergehenden PN-Chip ableitbar ist. Vorzugsweise weist der indexmäßig (und zeitlich) erste abgeleitete Chip (mit Index null) einen Wert auf, der aus einer XOR-Verknüpfung des indexmäßig ersten PN-Chips (mit Index null) mit dem indexmäßig letzten PN-Chip ableitbar ist. Durch die Verwendung derartiger abgeleiteter Sequenzen kann insbesondere das Verknüpfungselement 113 bzw. 213 und 221 sehr einfach und energiesparend realisiert werden.

Die nachfolgende Tabelle zeigt sowohl die gemäß IEEE 802.15.4 sendeseitig zu verwendenden PN-Sequenzen P0, P1, ... als auch die erfindungsgemäß den PN-Sequenzen zugeordneten abgeleiteten Sequenzen F0, F1, ....

Was die sendeseitig zu verwendenden PN-Sequenzen P0, P1, P2, ... betrifft, so ist zunächst festzustellen, dass ein Sequenzvorrat mit insgesamt 16 PN-Sequenzen P0, P1, ..., P15 spezifiziert sein kann. Jede PN-Sequenz umfaßt hierbei 32 sog. Chips, die jeweils einen Wert von logisch null (0) oder eins (1) annehmen können. Wie aus der Tabelle ersichtlich ist, nehmen z.B. die ersten zehn Chips der PN-Sequenz P5 die Werte 0 0 1 1 0 1 0 1 0 0 an.

Für die Chips z.B. der PN-Sequenz P5 werden zur Vereinfachung der Beschreibung die Parameter P5c0 (erster Chip (c0) von P5), P5c1 (zweiter Chip (c1)), ..., P5c30, P5c31 (letzter Chip (c31)) eingeführt. Analoges gilt für die anderen PN-Sequenzen, so dass Picj den Chip mit Index j (d.h. der (j+1)-te Chip) der PN-Sequenz mit Index i (Pi) bezeichnet, wobei i=0,1,...,15 und j= 0,1,...,31. Weiterhin werden zur besseren Unterscheidbarkeit der Chips der PN-Sequenzen von denjenigen der abgeleiteten Sequenzen die ersteren als PN-Chips bezeichnet.

Unterteilt man die insgesamt 16 PN-Sequenzen P0, P1, ..., P15 des Sequenzvorrats in eine erste Gruppe PG1 der acht "ersten" PN-Sequenzen P0, P1, ..., P7 und eine zweite Gruppe PG2 der acht "zweiten" PN-Sequenzen P8, P9, ..., P15, so ist aus der Tabelle weiterhin zu ersehen, dass sich die ersten PN-Sequenzen P0, P1, ..., P7 nur durch eine zyklische Verschiebung ihrer Chipwerte voneinander unterscheiden. So ist z.B. das am Anfang der PN-Sequenz P0 vorkommende Bitmuster {1 1 0 1 1 0} in der PN-Sequenz P1 ab dem PN-Chip P1c4, in der PN-Sequenz P2 ab P2c8, in P3 ab P3c12, in P4 ab P4c16, ..., und schließlich in P7 ab P7c28 - bei zyklischer Erweiterung - zu erkennen. Auch die zweiten PN-Sequenzen P8, P9, ..., P15 unterscheiden sich nur durch eine zyklische Verschiebung ihrer Chipwerte voneinander.

| Pi: | PN-Sequenz i (sendeseitig) | (Pic0 Pic1 Pic2 Pic3 ... Pic30 Pic31) |
|---|---|---|
| Fi: | von Pi abgeleitete Sequenz | (Fic0 Fic1 Fic2 Fic3 ... Fic30 Fic31) |

P0:

1 1 0 1 1 0 0 1 1 1 0 0 0 0 1 1 0 1 0 1 0 0 1 0 0 0 1 0 1 1 1 0

F0:

+ + + - - - - - + + + - + + + - + - + + - - + + - + + - -

P1:

1 1 1 0 1 1 0 1 1 0 0 1 1 1 0 0 0 0 1 1 0 1 0 1 0 0 1 0 0 0 1 0

F1:

+ + - - + + + - - - - - - + + + - + + + + - + - + + + - - + + -

P2:

0 0 1 0 1 1 1 0 1 1 0 1 1 0 0 1 1 1 0 0 0 0 1 1 0 1 0 1 0 0 1 0

F2:

- + + - + + - - + + + - - - - - + + + - + + + + - + - + + + -

P3:

0 0 1 0 0 0 1 0 1 1 1 0 1 1 0 1 1 0 0 1 1 1 0 0 0 0 1 1 0 1 0 1

F3:

+ + + - - + + - + + - - + + + - - - - - + + + - + + + + - + -

P4:

0 1 0 1 0 0 1 0 0 0 1 0 1 1 1 0 1 1 0 1 1 0 0 1 1 1 0 0 0 0 1 1

F4:

+ - + - + + + - - + + - + + - - + + + - - - - - + + + - + + +

P5:

0 0 1 1 0 1 0 1 0 0 1 0 0 0 1 0 1 1 1 0 1 1 0 1 1 0 0 1 1 1 0 0

F5:

- + + + + - + - + + + - - + + - + + - - + + + - - - - - - + + +

P6:

1 1 0 0 0 0 1 1 0 1 0 1 0 0 1 0 0 0 1 0 1 1 1 0 1 1 0 1 1 0 0 1

F6:

- + + + - + + + + - + - + + + - - + + - + + - - + + + - - - - -

P7:

1 0 0 1 1 1 0 0 0 0 1 1 0 1 0 1 0 0 1 0 0 0 1 0 1 1 1 0 1 1 0 1

F7:

- - - - - + + + - + + + + - + - + + + - - + + - + + - - + + + -

P8:

1 0 0 0 1 1 0 0 1 0 0 1 0 1 1 0 0 0 0 0 1 1 1 0 1 1 1 1 0 1 1

F8:

- - - + + + + + + - - - + - - - - + - + - - - + + - - + - - + +

P9:

1 0 1 1 1 0 0 0 1 1 0 0 1 0 0 1 0 1 1 0 0 0 0 0 1 1 1 0 1 1 1

```
F9:
- - + + - - - + + + + + + - - - + - - - - + - + - - - + + - - +

P10:
0 1 1 1 1 0 1 1 1 0 0 0 1 1 0 0 1 0 0 1 0 1 1 0 0 0 0 0 0 1 1 1
F10:
+ - - + - - + + - - - + + + + + - - - + - - - - - + - + - - - +

P11:
0 1 1 0 1 1 1 1 0 1 1 1 0 0 0 1 1 0 0 1 0 0 1 0 1 1 0 0 0 0 0
F11:
- - - + + - - + - - + + - - - + + + + + - - - + - - - - - + - +

P12:
0 0 0 0 0 1 1 1 0 1 1 1 1 0 1 1 1 0 0 0 1 1 0 0 1 0 0 1 0 1 1 0
F12:
- + - + - - - + + - - + - - + + - - - + + + + + - - - - + - - -

P13:
0 1 1 0 0 0 0 0 0 1 1 1 0 1 1 1 1 0 1 1 1 0 0 0 1 1 0 0 1 0 0 1
F13:
+ - - - - + - + - - - + + - - + - - + + - - - + + + + + + - - -

P14:
1 0 0 1 0 1 1 0 0 0 0 0 0 1 1 1 0 1 1 1 1 0 1 1 1 0 0 0 1 1 0 0
F14:
+ - - - + - - - - + - + - - - + + - - + - - + + - - - + + + + +

P15:
1 1 0 0 1 0 0 1 0 1 1 0 0 0 0 0 0 1 1 1 0 1 1 1 1 0 1 1 1 0 0 0
F15:
+ + + + + - - - + - - - - + - + - - - + + - - + - - + + - - - +
```

Weiterhin ist erkennbar, dass zu jeder ersten PN-Sequenz der ersten Gruppe PG1 eine zweite PN-Sequenz der zweiten Gruppe PG2 existiert, die sich nur in jedem zweiten Chipwert von dieser ersten PN-Sequenz der ersten Gruppe PG1 unterscheidet - und zwar durch eine Inversion jedes zweiten Chipwertes.

Vergleicht man z.B. die PN-Sequenzen P0 aus PG1 und P8 aus PG2 in der Tabelle, so stellt man fest, dass die PN-Chips mit geradem Index jeweils identische Werte aufweisen ($P0c0=P8c0=1$; $P0c2=P8c2=0$; $P0c4=P8c4=1$; etc.), während die PN-Chips mit ungeradem Index unterschiedliche (zueinander invertierte) Werte annehmen ($P0c1=1$, $P8c1=0$, $P0c3=1$, $P8c3=0$; $P0c5=0$, $P8c5=1$ etc.).

Jeder PN-Sequenz kann erfindungsgemäß eine nicht identische - an die differentielle Demodulation angepasste - abgeleitete Sequenz zugeordnet werden, der PN-Sequenz P0 beispielsweise die in der Tabelle unterhalb von P0 aufgeführte abgeleitete Sequenz F0, der PN-Sequenz P1 die abgeleitete Sequenz F1 etc. Die Chips der abgeleiteten Sequenzen, hier als abgeleitete Chips bezeichnet, können die antipodalen Werte +1 und -1 annehmen, wobei aus Gründen der Übersichtlichkeit in der Tabelle nur das Vorzeichen dieser Werte eingetragen ist. Analog zur oben eingeführten Bezeichnung der PN-Chips wird der abgeleitete Chip mit Index j der abgeleiteten Sequenz mit Index i im Folgenden mit Ficj bezeichnet, wobei i=0,1,...15 und j=0,1,...,31.

Die Werte der abgeleiteten Chips ergeben sich wie folgt aus den Werten der PN-Chips. Um z.B. den Wert des abgeleiteten Chips F0c2 zu bilden, der gemäß der Tabelle +1 beträgt, ist der Wert des in der Tabelle direkt darüber eingetragenen PN-Chips P0c2=0 logisch XOR zu verknüpfen mit dem Wert des links (d.h. des zeitlich vorhergehenden) von P0c2 eingetragenen PN-Chips P0c1=1. Die logische XOR-Verknüpfung ergibt in diesem Falle einen Wert von logisch 1, dem der in der Tabelle für F0c2 eingetragene antipodale Wert +1 zugeordnet ist. Entsprechend ergibt sich der Wert von F0c4 aus P0c4 XOR P0c3 = 1 XOR 1 = 0 zum in der Tabelle für Foc4 eingetragenen Wert von -1, da der logischen null ein antipodaler Wert von -1 zugeordnet ist. Diese Ableitungsvorschrift gilt für alle abgeleiteten Chips mit positivem geradem Index. Bezeichnen also Ficj den abgeleiteten Chip mit Index j der abgeleiteten Sequenz mit Index i und Picj und Picn den PN-Chip mit Index j bzw. n der PN-Sequenz mit Index i, so ergibt sich für positive gerade Indizes j der abgeleitete Chip Ficj für i=0,1,...,15 zu

$$\text{Ficj} = 2^*(\text{Picj XOR Picn}) - 1 \quad \text{mit} \quad n=j\text{-}1 \quad \text{für} \quad j=2,4,6,\dots,30\ , \qquad (1)$$

wobei die Multiplikation des Ergebnisses der XOR-Verknüpfung mit dem Faktor 2 und die anschließende Subtraktion von 1 die Zuordnung der logischen Werte von 0 und 1 zu den antipodalen Werten -1 bzw. +1 widerspiegeln soll.

Für die Bildung der abgeleiteten Chips Ficj mit Index j=0 ist statt des (nicht existierenden) zeitlich vorhergehenden PN-Chips Picn mit Index n=j-1=-1 der letzte PN-Chip Picn mit n=31 zu verwenden, d.h.

$$\text{Ficj} = 2^*(\text{Picj XOR Picn}) - 1 \quad \text{mit} \quad j=0 \quad \text{und} \quad n=31 \quad \text{für} \quad i=0,1,\dots,15. \qquad (2)$$

Eine zu Gleichung (1) ähnliche Ableitungsvorschrift gilt für die abgeleiteten Chips Ficj mit ungeradem Index j. In diesem Falle ist das Ergebnis der XOR-Verknüpfung vor der Zuordnung zu antipodalen Werten zu invertieren:

$$\text{Ficj} = 2^*\text{INV}\{\text{Picj XOR Picn}\} - 1 \quad \text{mit} \quad n=j\text{-}1 \quad \text{für} \quad j=1,3,5,\dots,31\ , \qquad (3)$$

Wobei INV{} die logische Inversion bezeichnet und wiederum i=0,1,...,15 gilt.

Anstelle der Inversion der logischen Werte mit anschließender Zuordnung von logisch 0 zum antipodalen Wert -1 und von logisch 1 zum antipodalen Wert +1 kann natürlich auch eine andere Zuordnung, nämlich von logisch 0 zum antipodalen Wert +1 und von logisch 1 zum antipodalen Wert -1 verwendet und damit auf die logische Inversion verzichtet werden. Als Formel ergibt sich dann

$$\text{Ficj} = 1 - 2^*(\text{Picj XOR Picn}) \quad \text{mit} \quad n=j\text{-}1 \quad \text{für} \quad j=1,3,5,\dots,31\ . \qquad (3')$$

Die Verwendung des jeweils "aktuellen" PN-Chips (mit dem Index des zu bildenden abgeleiteten Chips) und des jeweils vorangehenden PN-Chips korrespondiert mit der in der Beschreibungseinleitung erläuterten sendeseitigen Aufteilung der PN-Chips mit geradem (ungeradem) Index auf den Inphase-(I)-Träger (Quadraturphasen-(Q)-Träger) im Rahmen der Offset-QPSK-Modulation (quarternary phase shift keying). Andere sendeseitige I-/Q-Aufteilungen der PN-Chips erfordern eine entsprechend angepaßte Bildung der abgeleiteten Chips.

Unterteilt man die insgesamt 16 abgeleiteten Sequenzen F0, F1, ..., F15 in eine dritte Gruppe FG1 der acht abgeleiteten Sequenzen F0, F1, ..., F7 und eine vierte Gruppe FG2 der acht abgeleiteten Sequenzen F8, F9, ..., F15, so ist aus der Tabelle zu ersehen, dass sich die abgeleiteten Sequenzen F0, F1, ..., F7 der dritten Gruppe FG1 nur durch eine zyklische Verschiebung ihrer Chipwerte voneinander unterscheiden. So ist z.B. das am Anfang der abgeleiteten Sequenz F0 vorkommende Bitmuster {+ + + - - -} in der abgeleiteten Sequenz F1 ab dem abgeleiteten Chip F1c4, in der abgeleiteten Sequenz F2 ab F2c8, in F3 ab F3c12, in F4 ab F4c16, ..., und schließlich in F7 ab F7c28 - bei zyklischer Erweiterung - zu erkennen. Auch die abgeleiteten Sequenzen F8, F9, ..., F15 der vierten Gruppe FG2 unterscheiden sich nur durch eine zyklische Verschiebung ihrer Chipwerte voneinander.

Weiterhin ist festzustellen, dass zu jeder abgeleiteten Sequenz der dritten Gruppe FG1 eine abgeleitete Sequenz der vierten Gruppe FG2 existiert, die sich nur durch eine Inversion *aller* ihrer Chipwerte unterscheidet. Vergleicht man z.B. die abgeleiteten Sequenz F0 aus FG1 mit F8 aus FG2 in der Tabelle, so stellt man fest, dass sämtliche Chipwerte invertiert sind. Da dies auch für die Sequenzpaare F1/F9, F2/F10 etc. gilt, ist festzustellen, dass alle abgeleiteten Sequenzen der dritten Gruppe FG 1 in invertierter Form in der vierten Gruppe FG2 enthalten sind:

$$Ficj = (-1)^*Fncj \quad mit \quad i=0,1,...,7, \quad n=i+8 \quad und \quad j=0,1,...,31 \, . \qquad (4)$$

Im Gegensatz zu den PN-Sequenzen, bei denen sich die entsprechenden Sequenzpaare P0/P8, P1/P9 etc. durch eine Inversion *jedes zweiten* PN-Chips unterscheiden, unterscheiden sich die entsprechenden Paare F0/F8, F1/F9 etc. von abgeleiteten Sequenzen durch eine Inversion aller ihrer Chipwerte.

Die in den vorhergehenden Absätzen genannten Eigenschaften der Verknüpfungsfolgen ermöglichen extrem einfache Realisierungen der Verknüpfungselemente 113, 213 und 221 und tragen zu einer weiteren Reduktion des Stromverbrauchs bei.

Bezugszeichenliste

101 Addierer
103 Eingang
105 Eingang
107 Ausgang
109 Verzögerungselement
111 Verstärker
113 Verknüpfungselement
115 Additionselement
117 Ausgang
119 Verstärker
201 Multiplexer
203 Eingang
205 Eingang
209 Bitbreitenänderungselement
211 Verzögerungselement
213 Verknüpfungselement
215 Additionseinrichtung
217 Addierer
219 Verzögerungselement
221 Verknüpfungselement
223 Additionseinrichtung
225 Bitbreitenänderungselement
227 Buffer-Element
229 Ausgang
231 Verstärker
233 Addierer
235 Verarbeitungselement
237 Verstärker
238 Bitbreitenänderungselement
239 Buffer-Element
241 Bitbreitenänderungselement
243 Buffer-Element
301 Sendesymbol
303 Sendesymbol
305 Präambel
401 Kreuzkorrelationsfilter

| 403 | Kammfilter |
|-----|------------|
| 501 | Korrelationsfilter |
| 503 | Addierer |
| 505 | Verzögerungselement |
| 507 | Verstärkungselement |
| 509 | Verstärkungselement |
| 601 | Schieberegister |
| 603 | Multiplizierer |
| 605 | Additionselement |

**Patentansprüche**

1. Korrelationsvorrichtung, mit:

    einem Addierer (101) zum Addieren einer Eingangssignalfolge und einer Hilfssignalfolge, um eine Additionssignalfolge zu erhalten;
    einem Verzögerungselement (109) zum Verzögern der Additionssignalfolge, um die Hilfssignalfolge zu erhalten, wobei das Verzögerungselement (109) eine Mehrzahl von Koeffizientenausgängen zum Bereitstellen von Koeffizienten der Additionssignalfolge aufweist;
    einem Verknüpfungselement (113) zum koeffizientenweisen Verknüpfen zumindest eines Koeffizienten der Additionssignalfolge mit einem Verknüpfungskoeffizienten, um zumindest ein Korrelationsergebnis zu erhalten; und
    mit einer Additionseinrichtung (115) zum Aufsummieren der Korrelationsergebnisse.

2. Korrelationsvorrichtung gemäß Anspruch 1, wobei das Verzögerungselement (109) eine Anzahl von Speicherelementen mit jeweils einem Koeffizientenausgang aufweist und ausgebildet ist, die Anzahl Koeffizienten der Additionssignalfolge aufzunehmen oder bereitzustellen.

3. Korrelationsvorrichtung gemäß einem der Ansprüche 1 oder 2, wobei der Addierer (101) einen ersten Addierereingang (103) zum Empfangen der Eingangssignalfolge, einen zweiten Addierereingang (105) zum Empfangen der Hilfssignalfolge und einen Addiererausgang (107) zum Ausgeben der Additionssignalfolge aufweist, wobei das Verzögerungselement (109) dem Addiererausgang (107) nachgeschaltet ist und einen Ausgang aufweist, der mit dem zweiten Addierereingang (105) gekoppelt ist, wobei das Verzögerungselement (109) ferner eine Mehrzahl von Ausgängen zum Bereitstellen der Koeffizienten der Additionssignalfolge aufweist, wobei das Verknüpfungselement (113) der Mehrzahl von Ausgängen des Verzögerungselementes (109) nachgeschaltet ist und eine Mehrzahl von Ausgängen zum Bereitstellen von Korrelationsergebnissen aufweist, und wobei das Verknüpfungselement (113) ausgebildet ist, die an der Mehrzahl von Ausgängen des Verzögerungselementes (109) bereitstellbaren Koeffizienten der Additionssignalfolge koeffizientenweise mit Verknüpfungskoeffizienten zu verknüpfen, um die Korrelationsergebnisse bereitzustellen.

4. Korrelationsvorrichtung gemäß einem der Ansprüche 1 bis 3, wobei das Verknüpfungselement (113) ausgebildet ist, um einen Koeffizienten der Additionssignalfolge mit einem Skalierungsfaktor zu skalieren, um ein Korrelationsergebnis zu erhalten, wobei der Skalierungsfaktor durch eine Amplitude oder durch ein Vorzeichen eines Verknüpfungskoeffizienten bestimmt ist.

5. Korrelationsvorrichtung gemäß einem der Ansprüche 1 bis 4, wobei das Verknüpfungselement (113) ausgebildet ist, um einen Koeffizienten der Additionssignalfolge unverändert oder vorzeicheninvertiert als ein Korrelationsergebnis auszugeben, falls ein Vorzeichen eines Verknüpfungskoeffizienten positiv oder negativ ist.

6. Korrelationsvorrichtung gemäß einem der Ansprüche 1 bis 5, wobei der Addierer (101) und das Verzögerungselement (109) angeordnet sind, um ein Kammfilter zu formen.

7. Korrelationsvorrichtung gemäß einem der Ansprüche 1 bis 6, wobei die Verknüpfungsfolge durch eine differentielle Demodulation einer sendeseitig verwendbaren Präambel abgeleitet ist.

8. Detektionsvorrichtung zum Detektieren einer Präambel in einer Eingangssignalfolge unter Verwendung einer Verknüpfungsfolge, die die Präambel oder eine von der Präambel abhängige Präambelfolge aufweist, mit:

der Korrelationsvorrichtung gemäß einem der Ansprüche 1 bis 7; und

einem Detektor zum Detektieren der Präambel auf der Basis eines Ausgangssignals der Korrelationsvorrichtung.

9. Korrelationsvorrichtung gemäß einem der Ansprüche 1 bis 6, wobei dem Verzögerungselement (109) ein Verstärker zum verstärken der Hilfssignalfolge nachgeschaltet ist.

10. Korrelationsverfahren, mit folgenden Schritten:

Addieren einer Eingangssignalfolge und einer Hilfssignalfolge, um eine Additionssignalfolge zu erhalten;
Verzögern der Additionssignalfolge, um die Hilfssignalfolge zu erhalten;
Bereitstellen zumindest eines Koeffizienten der Additionssignalfolge;
koeffizientenweises Verknüpfen des zumindest einen Koeffizienten der Additionssignalfolge mit einem Verknüpfungskoeffizienten, um ein Korrelationsergebnis zu erhalten, und
Aufsummieren der Korrelationsergebnisse mit einer Additionseinrichtung (115).

11. Verfahren zum Detektieren einer Präambel in einer Eingangssignalfolge unter Verwendung einer Verknüpfungsfolge, die Präambel oder eine von der Präambel abhängige Präambelfolge aufweist, mit:

dem Korrelationsverfahren gemäß Anspruch 10; und
dem Schritt des Detektierens der Präambel auf der Basis eines Ausgangssignals der Korrelationsvorrichtung.

12. Computerprogramm zum Durchführen des Verfahrens gemäß Anspruch 10 oder 11, wenn das Computerprogramm auf einem Computer abläuft.

**Claims**

1. Correlation device comprising:

an adder (101) for adding an input signal train and an auxiliary signal train in order to obtain an addition signal train;
a delay element (109) for delaying the addition signal train in order to obtain the auxiliary signal train, wherein the delay element (109) has a plurality of coefficient outputs for providing coefficients of the addition signal train;
a linking element (113) for linking, in terms of coefficients, at least one coefficient of the addition signal train with a linking coefficient in order to obtain a correlation result; and an addition device (115) for summating the correlation results.

2. Correlation device according to claim 1, wherein the delay element (109) comprises a number of storage elements each with a respective coefficient output and is constructed to receive or provide the number of coefficients of the addition signal train.

3. Correlation device according to one of claims 1 and 2, wherein the adder (101) has a first adding input (103) for reception of the input signal train, a second adding input (105) for reception of the auxiliary signal train and an adding output (107) for issue of the additional signal train, wherein the delay element (109) is connected downstream of the adding output (107) and has an output with which the second adding input (105) is coupled, wherein the delay element (109) additionally has a plurality of outputs for providing the coefficients of the additional signal train, wherein the linking element (113) is connected downstream of the plurality of outputs of the delay element (109) and has a plurality of outputs for providing correlation results, and wherein the linking element (113) is constructed to link the coefficients, which can be provided at the plurality of outputs of the delay element (109), of the addition signal train in terms of coefficients with linking coefficients in order to provide the correlation results.

4. Correlation device according to any one of claims 1 to 3, wherein the linking element (113) is constructed in order to scale a coefficient of the addition signal train by a scaling factor in order to obtain a correlation result, wherein the scaling factor is determined by an amplitude or by a sign of a linking coefficient.

5. Correlation device according to any one of claims 1 to 4, wherein the linking element (113) is constructed to issue a coefficient of the addition signal train unchanged or with inverted sign as a correlation result if a sign of a linking coefficient is positive or negative.

6.  Correlation device according to any one of claims 1 to 5, wherein the adder (101) and the delay element (109) are arranged to form a comb filter.

7.  Correlation device according to any one of claims 1 to 6, wherein the linking train is derived by a differential demodulation of a preamble usable at the transmission side.

8.  Detection device for detection a preamble in an input signal train with use of a linking train, which has the preamble or a preamble train dependent on the preamble, comprising:

    the correlation device according to any one of claims 1 to 7; and
    a detector for detecting the preamble on the basis of an output signal of the correlation device.

9.  Correlation device according to any one of claims 1 to 6, wherein an amplifier for amplifying the auxiliary signal train is connected downstream of the delay element (109).

10. Correlation method, comprising the following steps:

    adding an input signal train and an auxiliary train in order to obtain an addition signal train;
    delaying the addition signal train in order to obtain the auxiliary signal train;
    providing at least one coefficient of the addition signal train;
    linking in terms of coefficients the at least one coefficient of the addition signal train with a linking coefficient in order to obtain a correlation result; and
    summating the correlation results by an addition device (115).

11. Method of detecting a preamble in an input signal train with use of a linking train, which has the preamble or a preamble train dependent on the preamble, comprising:

    the correlation method according to claim 10; and
    the step of detecting the preamble on the basis of an output signal of the correlation device.

12. Computer program for performing the method according to claim 10 or 11 when the computer program is executed on a computer.

**Revendications**

1.  Dispositif de corrélation comprenant :

    . un additionneur (101) pour additionner une suite de signaux d'entrée et une suite de signaux auxiliaires, pour obtenir une suite de signaux d'addition ;
    . un élément de retardement (109) pour retarder la suite des signaux d'addition pour conserver la suite des signaux auxiliaires, l'élément de retardement (109) présentant une pluralité de sorties de coefficients pour la fourniture de coefficients de la suite de signaux d'addition ;
    . un élément de liaison (113) pour la liaison à la manière de coefficients d'au moins un coefficient de la suite de signaux d'addition à un coefficient de liaison, pour obtenir au moins un résultat de corrélation, et
    . un dispositif d'addition (115) pour l'addition des résultats de corrélation.

2.  Dispositif de corrélation selon la revendication 1, dans lequel l'élément de retardement (109) présente un certain nombre d'éléments mémoire comportant chacun une sortie de coefficient et est conçu pour recevoir ou fournir le nombre de coefficients de la suite de signaux d'addition.

3.  Dispositif de corrélation selon l'une quelconque des revendications 1 ou 2, dans lequel l'additionneur (101) présente une première entrée d'additionneur (103) pour la réception de la suite de signaux d'entrée, une deuxième entrée d'additionneur (105) pour la réception de la suite de signaux auxiliaires et une sortie d'additionneur (107) pour la sortie de la suite de signaux d'addition, dans lequel l'élément de retardement (109) est monté en aval de la sortie d'additionneur (107) et présente une sortie couplée à la deuxième entrée d'additionneur (105), dans lequel l'élément de retardement (109) présente de plus une pluralité de sorties pour la fourniture des coefficients de la suite de signaux d'addition, dans lequel l'élément de liaison (113) est monté en aval de la pluralité de sorties de l'élément de retardement (109) et présente une pluralité de sorties pour la fourniture de résultats de corrélation, et dans lequel l'élément de liaison (113) est conçu pour relier à la manière de coefficients les coefficients de la suite de signaux d'addition pouvant être fournis au niveau de la pluralité de sorties de l'élément de retardement (109) à des coefficients de liaison, pour fournir les résultats de corrélation.

**4.** Dispositif de corrélation selon l'une quelconque des revendications 1 à 3, dans lequel l'élément de liaison (113) est conçu pour cadrer un coefficient de la suite de signaux d'addition à l'aide d'un facteur d'échelle pour obtenir un résultat de corrélation, le facteur d'échelle étant défini par une amplitude ou un signe d'un coefficient de liaison.

**5.** Dispositif de corrélation selon l'une quelconque des revendications 1 à 4, dans lequel l'élément de liaison (113) est conçu pour délivrer un coefficient de la suite de signaux d'addition inchangé ou de signe inversé comme un résultat de corrélation, dans le cas où un signe d'un coefficient de liaison est positif ou négatif.

**6.** Dispositif de corrélation selon l'une quelconque des revendications 1 à 5, dans lequel l'additionneur (101) et l'élément de retardement (109) sont disposés de manière à former un filtre-peigne.

**7.** Dispositif de corrélation selon l'une quelconque des revendications 1 à 6, dans lequel la suite de liaisons est déduite par une démodulation différentielle d'un préambule utilisable du côté émission.

**8.** Dispositif de détection pour la détection d'un préambule dans une suite de signaux d'entrée en utilisant une suite de liaison qui présente le préambule ou une suite de préambules dépendante du préambule, comprenant :

. le dispositif de corrélation selon l'une quelconque des revendications 1 à 7, et
. un détecteur pour la détection du préambule sur la base d'un signal de sortie du dispositif de corrélation.

**9.** Dispositif de corrélation selon l'une quelconque des revendications 1 à 6, dans lequel un amplificateur pour l'amplification de la suite de signaux auxiliaires est monté en aval de l'élément de retardement (109).

**10.** Procédé de corrélation comprenant les étapes suivantes :

. addition d'une suite de signaux d'entrée et d'une suite de signaux auxiliaires pour obtenir une suite de signaux d'addition ;
. retardement de la suite de signaux d'addition pour obtenir la suite de signaux auxiliaires;
. fourniture d'au moins un coefficient de la suite de signaux d'addition ;
. établissement d'une liaison à la manière de coefficients entre l'au moins un coefficient de la suite de signaux d'addition et un coefficient de liaison pour obtenir un résultat de corrélation, et
. addition des résultats de corrélation au moyen d'un dispositif d'addition (115).

**11.** Procédé de détection d'un préambule dans une suite de signaux d'entrée en utilisant une suite de liaison qui présente un préambule ou une suite de préambules dépendante du préambule, comprenant :

. le procédé de corrélation selon la revendication 10, et
. l'étape de détection du préambule sur la base d'un signal de sortie du dispositif de corrélation.

**12.** Programme d'ordinateur pour l'exécution du procédé selon la revendication 10 ou 11 lorsque le programme d'ordinateur se déroule dans un ordinateur.

FIG. 1

FIG. 2

EP 2 047 608 B1

FIG.3

FIG.4

FIG.5

FIG.6

**IN DER BESCHREIBUNG AUFGEFÜHRTE DOKUMENTE**

**In der Beschreibung aufgeführte Patentdokumente**

- EP 1391999 A1

**In der Beschreibung aufgeführte Nicht-Patentliteratur**

- **Karl-Dirk Kammeyer.** Nachrichtenübertragung. vol. 2